(19) Europäisches Patentamt
European Patent Office
Office européen des brevets

(11) **EP 1 880 184 B1**

(12) **EUROPÄISCHE PATENTSCHRIFT**

(45) Veröffentlichungstag und Bekanntmachung des Hinweises auf die Patenterteilung:
**18.04.2012 Patentblatt 2012/16**

(21) Anmeldenummer: **06754886.7**

(22) Anmeldetag: **27.04.2006**

(51) Int Cl.:
***G01M 3/20*** *(2006.01)*

(86) Internationale Anmeldenummer:
**PCT/EP2006/061875**

(87) Internationale Veröffentlichungsnummer:
**WO 2006/120122 (16.11.2006 Gazette 2006/46)**

(54) **SCHNÜFFELLECKSUCHER MIT QUARZFENSTERSENSOR**

SNIFFER LEAK DETECTOR COMPRISING A DETECTOR WITH A QUARTZ WINDOW

DETECTEUR DE FUITES RENIFLEUR COMPORTANT UN CAPTEUR A FENETRE DE QUARTZ

(84) Benannte Vertragsstaaten:
**DE FR GB IT SE**

(30) Priorität: **12.05.2005 DE 102005021909**

(43) Veröffentlichungstag der Anmeldung:
**23.01.2008 Patentblatt 2008/04**

(73) Patentinhaber: **Inficon GmbH**
**50968 Köln (DE)**

(72) Erfinder:
• **WETZIG, Daniel**
**50999 Köln (DE)**

• **GROSSE BLEY, Werner**
**53125 Bonn (DE)**
• **LANG, Peter**
**53129 Bonn (DE)**
• **MEBUS, Stefan**
**50733 Köln (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**US-A- 5 786 529**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Schnuffellecksucher mit Quarzfenstersensor und insbesondere einen Schnüffellecksucher, der mit einer relativ einfachen Nachweisvorrichtung für das Spurengas auskommt.

Bei der Dichtheitsprüfung von Behältern und Rohrsystemen wird üblicherweise Helium als Spurengas benutzt und das Austreten von Helium wird mittels massenspektroskopischer Methoden nachgewiesen. Dazu wird das Gas ionisiert und anschließend werden durch Kombination von elektrischen und magnetischen Feldern die einzelnen Gaskomponenten bzw. deren Fragmente separiert. Nach der Trennung werden die Heliumionen mit einem Detektor nachgewiesen und das Signal wird anschließend verstärkt und ausgewertet. Der Nachweis von Helium kann auch mit gaschromatographischen Methoden erfolgen, wobei sich allerdings eine verringerte Nachweisempfindlichkeit ergibt.

Bei der Schnüffellecksuche wird eine konstante definierte Gasmenge durch eine Schnuffelleitung gesogen. Abhängig vom Gasdurchsatz durch die Schnüffelleitung und der Leckrate an einem Heliumleck (zur Dichtheitsprüfung werden die Prüflinge mit Helium befüllt und verschlossen) stellt sich im geschnüffelten Gasstrom eine bestimmte Testgaskonzentration ein. Ein geringer Anteil dieses geschnüffelten Gasgemisches wird über einen Flussteiler in das Nachweissystem (Massenspektrometer) eingelassen. Zur erfolgreichen Massentrennung in der Analyseeinheit darf der Druck im Standardnachweissystem einige $1 \times 10^{-4}$ mbar nicht übersteigen. Damit beträgt der nachzuweisende Heliumpartialdruck bei einer Heliumkonzentration von 1 ppm nur $10^{-10}$ mbar.

Die Erzeugung des Totaldrucks im Bereich von $1 \times 10^{-4}$ mbar erfordert den Einsatz einer Turbomolekularpumpe. Der Einsatz einer solchen Pumpe ist teuer und erhöht die Störanfälligkeit und den Wartungsaufwand des Systems. Es ist erstrebenswert, den Nachweis des Testgases bei atmosphärische Bedingungen zu ermöglichen, so dass auf die Turbomolekularpumpe und den Flussteiler verzichtet werden kann.

In US 6,277,177 B1 (Leybold Vakuum GmbH) und DE 100 31 882 A1 (Leybold Vakuum GmbH) sind Sensoren für Helium oder Wasserstoff beschrieben, die eine Quarzfenstermembran aufweisen, welche ein vakuumdichtes Gehäuse abschließt. Die Quarzfenstermembran bildet einen selektiv wirkenden Durchlass für das festzustellende Gas. Der in dem Gehäuse angeordnete Testgassensor ist ein Gasdrucksensor, den auf den Totaldruck des in das Gehäuse eingedrungenen Gases reagiert. Da die Quarzmembran gasselektiv wirkt, stellt der Gasdrucksensor den Druck des Testgases in dem Gehäuse fest. Der in dem Gehäuse angeordnete Drucksensor ist vorzugsweise ein Penning-Drucksensor, der zwei parallele Katodenplatten, die mit gegenseitigem Abstand angeordnet sind, und zwischen den Katodenplatten einen Anodenring aufweist. Der Stromkreis, der zwischen den Katodenpfatten und dem Anodenring verläuft, enthält: ein Strommessgerät zur Messung des Katoden- oder Anodenstroms. Ein Magnetfeld wird von einem außerhalb des geschlossenen Gehäuses angebrachten Permanentmagneten erzeugt. Ein solcher Penning-Detektor hat den Vorteil, dass or wesentlich einfacher und kostengünstiger ist als ein Schnüffellecksucher mit Massenspektrometer. Bei der Quarzfenstertechnologie wird der gesamte Gasstrom am Sensor vorbeigeführt. Der Druck vor dem Sensor kann auch während des Betriebs dem atmosphärischen Druck entsprechen. Damit beträgt der Heliumpartialdruck bei einer He-Konzentration von 1 ppm $10^{-3}$ mbar, also sieben Größenordnungen über dem Druck der Standardmethode. Die Trennung von Helium und der sonstigen Gase erfolgt mittels einer dünnen Quarzmembran, die ausschließlich Helium in das Nachweisvolumen einlässt.

Der Erfindung liegt die Aufgabe zugrunde, einen Schnüffellecksucher zu schaffen, der einfach und kostengünstig aufgebaut ist und eine hohe Empfindlichkeit liefert.

Der Schnuffellecksucher nach der Erfindung ist durch die Merkmale des Patentanspruchs 1 definiert. Es handelt sich um einen Schnüffellecksucher mit einem für ein Testgas selektiv durchlässigen Quarzfenster. Dem Quarzfenster wird das zu untersuchende Gas über eine Schnüffelsonde zugeführt. Das Gas wird durch einen von dem Quarzfenster begrenzten Saugraum hindurchgeführt, so dass es an dem Quarzfenster entlangströmt, wie in US 5, 786, 529 A (Leybold AG) offenbart.

Ein Quarzfenstersensor bietet den Vorteil, dass er bei einem Druck von einigen 100 mbar betrieben werden kann. Im Gegensatz zum "punktförmigen" Gaseinlass in Form des Flussteilers beim Massenspektrometersystem ist bei einem Quarzfenstersensor der Gaseinlass über die gesamte Quarzfensterfläche verteilt, die einen Bereich von mehreren Quadratzentimetern überdeckt. Durch den Saugraum wird erreicht, dass das punktförmig von der Schnüffelleitung zugeführte Probengas sich vor dem Quarzfenster gleichmäßig verteilt, bevor es von der Vakuumpumpe abgesaugt wird. Wegen des geringen Partialdrucks des Testgases im Innern des Quarzfenstersensors permeiert ein Teil des Testgases entgegen der Wirkung der Vakuumpumpe durch die Quarzmembran in das Gehäuse. Dadurch, dass der Probengasstrom vor dem Quarzfenster gleichmäßig verteilt wird, ergibt sich eine hohe Ansprechempfindlichkeit.

Gemäß einer bevorzugten Weiterbildung der Erfindung ist vorgesehen, dass der Saugraum eine Gasführungsplatte enthält, die zusammen mit dem Quarzfenster einen Gasführungsraum begrenzt, und dass die Schnüffelteitung in den Gasführungsraum einmündet. Der Gasführungsraum ist deutlich schmaler als der Saugraum. Er begrenzt das vor dem Quarzfenster gebildete Volumen. Die Ansprechzeit des Schnüffellecksuchers wird wesentlich von der Gasmenge, die vor dem Sensor ausgetauscht werden muss, bestimmt. Die Zeit $\tau$, die zum Austausch des Gases vor der Sensormembran notwendig ist, kann wie folgt berechnet werden:

$$\tau = \frac{pV}{q_{pV}}$$

p: Druck vor Membran; V: Volumen vor Membran; $q_{pV}$: Fluss.

Das Volumen V des Gasführungsraumes wird also durch die Gasführungsplatte verringert, wodurch die Ansprechzeit ebenfalls verringert wird. Andererseits kann der Gasdruck p vor der Quarzmembran zur Erzielung einer hohen Empfindlichkeit mit einigen 100 mbar relativ hoch gewählt werden, da das Volumen entsprechend klein gewählt wurde, damit insgesamt eine Austauschzeit von deutlich unter 100 ms erreicht wird. Das geschnüffelte Gas wird längs des Gasführungsraumes an der Quarzmembran entlang geführt. Der Querschnitt ist auf minimales Volumen und ausreichenden Leitwert des Gasführungsraumes dimensioniert. Er muss für den ungehinderten Gasstrom ausreichend groß sein. Nachdem das Gas an der Quarzmembran entlang geströmt ist, gelangt es in den Saugraum, der an dieser Vakuumpumpe angeschlossen ist, um mit definiertem Saugvermögen abgepumpt zu werden.

Die Erfindung befasst sich ferner mit einem Schutz des Schnüffellecksuchers vor Verseuchung. Ein Quarzfenster-Heliumsensor zeigt nach der Anwesenheit, von Helium ein in zwei Stufen erfolgendes Signalabklingen. Dieses besteht aus einem schnellen Abklingen des Signals entsprechend der Vakuumzeitkonstante des Sensors und einem langsamen Abklingen des verschobenen Offsetstroms. Wird mit dem Schnüffellecksucher in stark mit Helium angereicherter Luft geschnüffelt, tritt eine Verseuchung des Sensors als Verschiebung des Offsets auf. Der Grad der Verschiebung des Offsets ist von der vom Sensor neu aufgenommenen Heliummenge abhängig. Die Verschiebung des Offsets muss zur genauen und schnellen Lecksuche vermieden werden. Dies wird erreicht, indem bei Überschreiten einer festgelegten Signalschwelle der Totaldruck vor der Sensormembran abgesenkt wird. Hierzu ist eine von der Vakuumpumpe zu dem Saugraum führende Saugleitung durch eine ein Ventil enthaltende ungedrosselte Bypassleitung überbrückbar. Die Bypassleitung kann kurzzeitig geöffnet werden, um das Saugvermogcn, mit dem an dem Volumen vor der Quarzmembran gepumpt wird, zu erhöhen. Dadurch wird der Totaldruck, und damit auch der Heliumpartialdruck vor der Sensormembran, abgesenkt. So wird die in den Sensor gelangende Heliummenge reduziert.

Bei Überschreiten einer noch höheren Signalschwelle kann ein Belüftungsventil geöffnet werden, wodurch das Gas vor der Quarzmembran durch Luft ersetzt wird. Das stark mit Testgas angereicherte Gas in der Schnüffelleitung wird so lange direkt zur Vakuumpumpe geleitet.

Der Quarzfenstersensor kann während seiner Lebenszeit nur eine begrenzte Menge an Helium aufnehmen. Luft enthält im natürlichen Zustand einen Anteil von 5 ppm Helium, entsprechend nimmt der Sensor permanent Helium aus der Atmosphäre während des Betriebs auf. Der Anteil, den der Sensor während eines Standby-Modus aufnimmt, muss reduziert werden. Damit eine schnelle Wiederinbetriobnahme mit hoher Messgenauigkeit nach dem Standby-Modus gewährleistet werden kann, muss aber das Temperaturprofil auf der Sensormembran bestehen bleiben. Während des Standby-Modus wird der Druck vor der Quarzmembran reduziert. Die Kühlleistung an der geheizten Sensormembran ist im Wesentlichen von dem Gasstrom (nicht vom Druck) vor der Membran abhängig. Ein Absenken des Druckes beeinflusst nur geringfügig den Fluss, so dass das Temperaturprofil auf der Sensormembran während des Standby-Modus erhalten bleibt. Alternativ kann der Gasstrom während des Ruhemodus durch eine geeignete Drossel anstatt durch die Schnüffelleitung gesogen werden. Dies hat den Vorteil, dass der Partikelfilter in der Spitze der Schnüffelleitung geschont wird.

In gewissen Zeitabständen kann gemäß einer bevorzugten Ausgestaltung der Erfindung ein Betriebsmodus "Simulation Grobleck" durchgeführt werden. Hierbei wird durch den Anwender das System zum schnellen Signalabklingen trainiert. Dazu wird mit dem Schnüffellecksucher an einer großen Heliumleckrate, z. B. $10^{-3}$ mbar l/s geschnüffelt, so dass das System neu "lernen" kann, nach großen Heliummengen schnell auf das Ausgangsniveau abzuklingen. Generell hat das Testleck, das in der Standardausführung in einem Lecksuchgerät eingebaut ist, eine Leckrate von nur $10^{-5}$ mbar l/s. Zur Simulation einer großen Leckrate wird das Saugvermögen der Vakuumpumpe mit einer ersten Drossel so weit reduziert, dass der Fluss durch die Schnüffelleitung etwa um den Faktor 100 sinkt. Damit erhöht sich die Heliumkonzentration während des Schnüffelns am Einbautestleck um den gleichen Faktor. Das System ordnet der erhöhten Konzentration eine entsprechend höhere Leckrate zu. So wird mit dem Testleck der Größe $10^{-5}$ mbar l/s ein Leck der Größe $10^{-3}$ mbar l/s simuliert.

Im Folgenden werden unter Bezugnahme auf die Zeichnungen Ausführungsbeispiele der Erfindung näher erläutert.

Es zeigen:

Fig. 1    ein Diagramm einer ersten Ausführungsform des Schnüffellecksuchers nach der Erfindung, und

Fig. 2    ein Diagramm einer zweiten Ausführungsform des Schnüffellecksuchers.

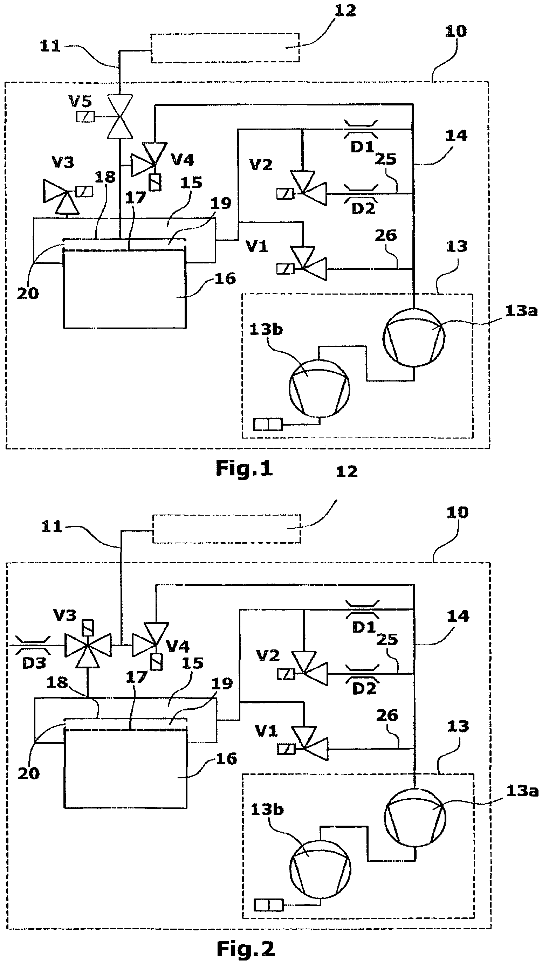

Gemäß Fig. 1 ist ein Grundgerät 10 vorgesehen, das über eine flexible Schnüffelleitung 11 mit einer Schnüffelsonde 12 verbunden ist. Die Schnüffelsonde 12 kann von Hand geführt werden, um das Testobjekt auf Leckstellen zu untersuchen, aus denen Testgas austritt.

Das Grundgerät 10 enthält eine Vakuumpumpe 13, bei der es sich im vorliegenden Beispiel um eine zweistufige Pumpe mit den Pumpstufen 13a und 13b handelt, die als Membranpumpen ausgeführt sind. Die Vakuumpumpe erzeugt ein Vakuum von etwa 50 mbar.

Von der Vakuumpumpe 13 führt eine Saugleitung 14 zu dem Saugraum 15. Der Saugraum 15 ist vor dem Quarzfenstersensor 16 gebildet. Die Wände des Saugraums 15 schließen an das Gehäuse des Quarzfenstersensors 16 an. Das Quarzfenster 17 des Quarzfenstersensors 16 wird von dem Saugraum 15 umschlossen. Innerhalb des Saugraums 15 befindet sich eine Gasführungsplatte 18, die dem Quarzfenster 17 mit Abstand gegenüber liegt und parallel zu diesem angeordnet ist. Das Quarzfenster 17 und die Gasführungsplatte 18 begrenzen den Gasführungsraum 19. Die Schnüffelleitung 11 mündet in den Gasführungsraum 19. Dieser weist seitliche Austrittsöffnungen 20 auf, durch die das Gas in den Saugraum 15 eintreten kann. Der Gasführungsraum 19 bewirkt eine Verteilung des Gases vor dem Quarzfenster 17.

Der Quarzfenstersensor 16 ist in der Weise ausgebildet wie der Sensor, der in DE 100 31 882 A1 beschrieben ist. Das Quarzfenster 17 besteht aus einer selektiv für Helium durchlässigen Membran. Im Übrigen enthält der Quarzfenstersensor 16 einen Penning-Drucksensor oder einen anderen Drucksensor, der ein elektrisches Signal erzeugt, welches den Druck in dem durch die Quarzmembran abgeschlossenen Gehäuse angibt. Aus diesem Druck wird das Signal für die detektierte Menge an Testgas abgeleitet.

Die Saugleitung 14 enthält zwischen der Vakuumpumpe 13 und dem Saugraum 15 eine erste Drossel D1, die die Saugleistung für den Normal-Betriebsmodus" bestimmt. Die erste Drossel D1 ist durch eine Umgehungsleitung 25 überbrückt, welche eine zweite Drossel D2 und in Reihe damit ein Ventil V2 enthält. Ferner ist die Drossel D1 von einer Bypassleitung 26 überbrückt, die ein Ventil V1 enthält.

Der Saugraum 15 ist über ein Belüftungsventil V2 mit der Umgebungsluft verbindbar.

Ein Verseuchungsschutz-Ventil V4 verbindet die Schnüffelleitung 11 ungedrosselt mit dem Saugeinlass der Vakuumpumpe 13.

Die Schnüffelleitung 11 enthält ein zusätzliches Ventil V5, das im Gasfluss unmittelbar vor dem Ventil V4 angeordnet ist. Das Ventil V5 ist ein Magnetventil, das dazu benutzt wird, während des Standby-Modus den Fluss zu stoppen und so den Druck vor der Sensormembran des Quarzfenstersensors 16 auf den Enddruck der Vakuumpumpen absenken zu können.

In der nachfolgenden Tabelle 1 sind die verschiedenen Betriebsmodi "Normal", "Standby", "Schutz vor Verseuchung" und "Simulation Grobleck" angegeben und dazu die entsprechenden Steflungen der Ventile V1, V2, V3 und V4. Ferner enthält die Tabelle eine Angabe darüber, welches Element das Saugvermögen der Saugvorrichtung bestimmt.

Tabelle 1:

| Betriebsmodus | V1 | V2 | V3 | V4 | Saugvermögen ist gegeben durch: |
|---|---|---|---|---|---|
| Normal | zu | auf | zu | zu | Drossel 2 |
| Standby | auf | auf | auf | zu | Drossel 3 |
| Schutz vor Verseuchung | auf | auf | auf (kurzzeitig) | auf | Pumpe |
| Simulation Grobleck | zu | zu | zu | zu | Drossel 1 |

Das Ausführungsbeispiel von Fig. 2 unterscheidet sich von Fig. 1 dadurch, dass das Beluftungsventil V3 in der Schnüffelleilung 11 sitzt und damit den Gasführungsraum 19 belüftet. Das Belüftungsventil V3 ist an seinem Einlass mit einer Drossel D3 versehen, um den Belüftungsstrom zu begrenzen. Das Verseuchungsschutz-Ventil V4 befindet sich auch hier zwischen der Schnüffelleitung 11 und der Vakuumpumpe 13.

Die Betriebsmodi der Ausführungsform nach Fig. 2 sind in der nachstehend wiedergegebenen Tabelle 2 angegeben.

Tabelle 2:

| Betriebsmodus | V1 | V2 | V3 | V4 | Saugvermögen ist gegeben durch: |
|---|---|---|---|---|---|
| Normal | zu | auf | zu | zum | Drossel 2 |
| Standby | auf | auf | zu | zu | Pumpe |
| Schutz vor Verseuchung | auf | auf | auf (kurzzeitig) | auf | Pumpe |

(fortgesetzt)

| Betriebsmodus | V1 | V2 | V3 | V4 | Saugvermögen ist gegeben durch: |
|---|---|---|---|---|---|
| Simulation Grobleck | zu | zu | zu | zu | Drossel 1 |

Die beiden gezeigten Varianten unterscheiden sich lediglich in der Betriebsweise während des Standby-Modus.

Bei dem ersten Ausführungsbeispiel wird während des Standby-Modus der Gasstrom weiter durch die Schnüffelleitung 11 geleitet. Da das geschnüffelte Gas auf dem Weg von der Schnüffelsonde 12 bis zum Quarzfenstersensor 16 kein Ventil passiert, hat das System ein kurzes Ansprechverhalten.

Bei dem Ausführungsbeispiel nach Fig. 2 wird der Gasstrom durch die Drossel D3 geführt. Der Leitwert der Drossel D3 ist gleich dem Leitwert der Schnüffelleitung 11 gewählt. So ist gewährleistet, dass der Gasfluss an dem Sensorfenster 17 während des Standby-Modus unverändert zum Normalbetrieb ist. Während des Standby-Betriebs wird bei dieser Variante ein in der Schnüffelleitung 11 vorgesehener Partikelfilter zusätzlich geschont.

## Patentansprüche

1. Schnüffellecksucher mit Quarzfenstersensor, mit einer Schnüffelsonde (12), die über eine Schnüffelleitung (11) mit dem Quarzfenstersensor (16) verbunden ist, einer Vakuumpumpe (13) und einem vor dem Quarzfenster (17) des Quarzfenstersensors (16) angeordneten Saugraum (15), der mit der Vakuumpumpe (13) verbunden ist,
**dadurch gekennzeichnet, dass**
der Saugraum (15) eine Gasführungsplatte (18) enthält, die zusammen mit dem Quarzfenster (17) einen Gasführungsraum (19) begrenzt, der schmaler als der Saugraum (15) ist, und dass die Schnüffelleitung (11) in den Gasführungsraum (19) einmündet.

2. Schnüffellecksucher nach Anspruch 1, **dadurch gekennzeichnet, dass** eine von der Vakuumpumpe (13) zu dem Saugraum (15) führende Saugleitung (14) eine erste Drossel (D1) enthält und dass die erste Drossel (D1) durch eine eine zweite Drossel (D2) und ein Ventil (V2) enthaltende Umgehungsleitung (25) überbrückbar ist.

3. Schnüffellecksucher nach Anspruch 1 oder 2, **dadurch gekennzeichnet, dass** eine von der Vakuumpumpe (13) zu dem Saugraum (15) führende Saugleitung (14) eine erste Drossel (D1) enthält und dass die erste Drossel (D1) durch eine ein Ventil (V1) enthaltende ungedrosselte Bypassleitung (26) überbrückbar ist.

4. Schnüffellecksucher nach einem der Ansprüche 1 bis 3, **dadurch gekennzeichnet, dass** zum Schutz vor Verseuchung des Quarzfenstersensors (16) die Schnüffelleitung (11) über ein Verseuchungsschutz-Ventil (V4) ungedrosselt mit der Vakuumpumpe (13) verbindbar ist.

5. Schnüffellecksucher nach einem der Ansprüche 1 bis 4, **dadurch gekennzeichnet, dass** der Saugraum (15) mit einem Belüftungsventil (V3) versehen ist.

6. Schnüffellecksucher nach Anspruch 5, **dadurch gekennzeichnet, dass** das Belüftungsventil (V3) mit einer Drossel (D3) in Reihe geschaltet an die Schnüffelleitung (11) angeschlossen ist.

7. Schnüffellecksucher nach einem der vorhergehenden Ansprüche, **gekennzeichnet durch** einen Normal-Betriebsmodus, in dem die Bypassleitung (26) gesperrt und die Umgehungsleitung (25) geöffnet ist.

8. Schnüffellecksucher nach einem der vorhergehenden Ansprüche, **gekennzeichnet durch** einen Standby-Betriebsmodus, bei dem die Bypassleitung (26) geöffnet und die Umgehungsleitung (25) geöffnet ist.

9. Schnüffellecksucher nach einem der vorhergehenden Ansprüche, **gekennzeichnet durch** einen Verseuchungsschutz-Betriebsmodus, bei dem die Bypassleitung (26) und die Umgehungsleitung (25) geöffnet sind und das Belüftungsventil (V3) vorübergehend geöffnet wird und das Verseuchungsschutz-Ventil (V4) geöffnet ist.

10. Schnüffellecksucher nach einem der vorhergehenden Ansprüche, **gekennzeichnet durch** einen Betriebsmodus "Simulation Grobleck", in dem die Bypassleitung (26), die Umgehungsleitung (25) und das Belüftungsventil (V3) gesperrt sind.

## Claims

1. A sniffer leak detector with a quartz window detector, comprising a sniffer probe (12) connected to the quartz window detector (16) via a sniffer conduit (11), a vacuum pump (13), and a suction chamber (15) situated in front of the quartz window (17) of the quartz window detector (16) and connected to the vacuum pump (13), **characterized in that** the suction chamber (15) includes a gas guidance plate (18) defining a gas guidance chamber (19) together with the quartz window (17), the chamber being narrower than the suction chamber (15), and **in that** the sniffer conduit (11) terminates in the gas guidance chamber (19).

2. The sniffer leak detector of claim 1, **characterized in that** a suction conduit (14) leading from the vacuum pump (13) to the suction chamber (15) includes a first throttle (D1), and **in that** the first throttle (D1) can be bridged by means of a shunt conduit (25) including second throttle (D2) and a valve (V2).

3. The sniffer leak detector of claim 1 or 2, **characterized in that** a suction conduit (14) leading from the vacuum pump (13) to the suction chamber (15) includes a first throttle (D1), and **in that** the first throttle (D1) can be bridged by a non-throttled bypass conduit (26) including a valve (V1).

4. The sniffer leak detector of one of claims 1 to 3, **characterized in that**, as a protection against a contamination of the quartz window detector (16), the sniffer conduit (11) may be connected to the vacuum pump (13) via a contamination protection valve (V4) without throttling.

5. The sniffer leak detector of one of claims 1 to 4, **characterized in that** the suction chamber (15) is provided with a venting valve (V3).

6. The sniffer leak detector of claim 5, **characterized in that** the venting valve (V3) is connected to the sniffer conduit (11) in series with a throttle (D3).

7. The sniffer leak detector of one of the preceding claims, **characterized by** a normal mode in which the bypass conduit (26) is closed and the shunt conduit (25) is open.

8. The sniffer leak detector of one of the preceding claims, **characterized by** a standby mode in which the bypass conduit (26) is open and the shunt conduit (25) is open.

9. The sniffer leak detector of one of the preceding claims, **characterized by** a contamination protection mode in which the bypass conduit (26) and the shunt conduit (25) are open and the venting valve (V3) is opened temporarily and the contamination protection valve (V4) is open.

10. The sniffer leak detector of one of the preceding claims, **characterized by** a "gross leak simulation" mode in which the bypass conduit (26), the shunt conduit (25) and the venting valve (V3) are closed.


## Revendications

1. Détecteur renifleur de fuites comprenant un capteur à fenêtre en quartz, une sonde renifleuse (12) reliée au capteur à fenêtre en quartz (16) via un conduit renifleur (11), une pompe à vide (13) et une chambre d'aspiration (15) disposée en amont de la fenêtre en quartz (17) du capteur à fenêtre en quartz (16) et reliée à la pompe à vide (13), **caractérisé en ce que** la chambre d'aspiration (15) contient une plaque de guidage de gaz (18) qui délimite avec la fenêtre en quartz (17) une chambre de guidage de gaz (19) qui est plus étroite que la chambre d'aspiration (15), et **en ce que** le conduit renifleur (11) débouche dans la chambre de guidage de gaz (19).

2. Détecteur renifleur de fuites selon la revendication 1, **caractérisé en ce qu'**un conduit d'aspiration (14) s'étendant de la pompe à vide (13) à la chambre d'aspiration (15) contient un premier étrangleur (D1) et **en ce que** le premier étrangleur (D1) peut être court-circuité par un conduit de dérivation (25) contenant un deuxième étrangleur (D2) et une soupape (V2).

3. Détecteur renifleur de fuites selon la revendication 1 ou 2, **caractérisé en ce qu'**un conduit d'aspiration (14) s'étendant de la pompe à vide (13) à la chambre d'aspiration (15) contient un premier étrangleur (D1) et **en ce que** le premier étrangleur (D1) peut être court-circuité par une conduite bypass (26) non étranglée contenant une soupape (V1).

4.  Détecteur renifleur de fuites selon l'une des revendications 1 à 3, **caractérisé en ce que**, pour la protection anticontamination du capteur à fenêtre en quartz (16), le conduit renifleur (11) peut être relié de manière non étranglée à la pompe à vide (13) par l'intermédiaire d'une soupape anticontamination (V4).

5.  Détecteur renifleur de fuites selon l'une des revendications 1 à 4, **caractérisé en ce que** la chambre d'aspiration (15) est pourvue d'une soupape d'aération (V3).

6.  Détecteur renifleur de fuites selon la revendication 5, **caractérisé en ce que** la soupape d'aération (V3), connectée en série avec un étrangleur (D3), est raccordée au conduit renifleur (11).

7.  Détecteur renifleur de fuites selon l'une des revendications précédentes, **caractérisé par** un mode de fonctionnement normal dans lequel la conduite bypass (26) est bloquée et le conduit de dérivation (25) est ouvert.

8.  Détecteur renifleur de fuites selon l'une des revendications précédentes, **caractérisé par** un mode de fonctionnement « veille » dans lequel la conduite bypass (26) est ouverte et le conduit de dérivation (25) est ouvert.

9.  Détecteur renifleur de fuites selon l'une des revendications précédentes, **caractérisé par** un mode de fonctionnement « anticontamination » dans lequel la conduite bypass (26) et le conduit de dérivation (25) sont ouverts et la soupape d'aération (V3) est ouverte transitoirement et la soupape anticontamination (V4) est ouverte.

10. Détecteur renifleur de fuites selon l'une des revendications précédentes, **caractérisé par** un mode de fonctionnement « simulation fuite importante » dans lequel la conduite bypass (26), le conduit de dérivation (25) et la soupape d'aération (V3) sont bloqués.

**Fig.1**

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6277177 B1
- DE 10031882 A1

- US 5786529 A